# EUROPEAN PATENT SPECIFICATION

(11) **EP 4 306 820 B1**
(45) Date of publication and mention of the grant of the patent: **28.01.2026**
(21) Application number: 22184391.5
(22) Date of filing: 12.07.2022
(51) Int. Cl.: F16D 65/092, F16D 65/847

(54) **BRAKE PAD FOR A BICYCLE OR A MOTORBIKE DISC BRAKE ASSEMBLY**
BREMSBELAG FÜR EINE FAHRRAD- ODER MOTORRADSCHEIBENBREMSANORDNUNG
PLAQUETTE DE FREIN POUR UN ENSEMBLE FREIN À DISQUE DE BICYCLETTE OU DE MOTO

(43) Date of publication of application: 17.01.2024
(73) Proprietor: Golec, Marcin, London SW19 2RR (GB)
(72) Inventor: Golec, Marcin, London SW19 2RR (GB)
(74) Representative: Farago-Schauer, Peter Andreas

(56) References cited:
- EP-A1- 0 686 785
- EP-A1- 3 967 585
- WO-A1-2016/178192
- CN-A- 112 552 754
- DE-U1- 202016 002 789

## Description

### BACKGROUND OF THE INVENTION

The present invention is directed to brake pad for a bicycle or a motorbike disc brake assembly and, more particularly, to a heat dissipation brake pad.

Biking or motor biking is becoming more and more popular as a means of transportation, like utility cycling, as a leisure activity and also as a competitive sport, like racing, bicycle touring or mountain biking. The bicycle and the motorbike industry are constantly increasing their offers of bicycles and motorbikes for all of these areas of use and improving their components.

One of the components that were constantly improved during the last years is the disc brake assembly. The problem with disc brake assemblies is that during the use of the bicycle or the motorbike, the assemblies need to provide a very good friction in order to stop the bicycle or motorbike in a quick and reliable manner. In addition, disc brake assemblies must also have a good heat resistance.

Generally, as known in the art, a disc braking assembly includes brake pad made of a backing plate which is usually manufactured of steel and friction pad made of a friction material and glued or otherwise bonded to the backing plate. During the braking action heat is generated by the friction of the pad with a disc brake rotor of the assembly. The generated heat needs to be dissipated in a fast manner. If the heat dissipation is not fast enough, the brake pad may overheat, in particular during long descends, and this leads to a loss of breaking power of the assembly (called brake fading). The user will then press on the brake lever even harder which in turn increases the heat of the brake pad even further with subsequent further loss in the breaking power.

Several attempts have been made in the prior art to improve the heat exchange behavior of braking assemblies including backing plates and friction pads.

As well known in the art, there are three types of heat transfer as far as the backing plate is concerned. In the following the terms heat and thermal will be used in an interchangeable manner.

One type of heat transfer is conduction which is the transfer of the thermal or heat energy through direct contact between the backing plate and the friction material of the friction pad. By the direct contact between the backing plate and the friction pad, the heat is transferred from the pad to the backing plate where it can be dissipated.

A further type of heat transfer is convection by means of which the thermal energy is transferred through the movement of air around the backing plate acting as a radiator. In this manner, the air takes the thermal energy out of the radiator / backing plate. Obviously, in this case, the radiator surface influences the dissipation of thermal energy.

A further type of heat transfer is the transfer of the thermal energy through the thermal radiation by means of electromagnetic waves emission from the surface. This type of heat exchange is functionally similar to that of infrared lamps used to heat you up in winter or cold weather.

As mentioned, a conventional brake assembly includes a brake pad having two components, namely a backing plate usually made of steel and a friction pad made of a friction material glued or otherwise bonded to the backing plate. However, while steel is advantageous in view of its stiffness and stability, the propagation of the heat is limited, as one cannot really influence thermal conduction of steel, inasmuch as all types of steels have more or less the same thermal conductivity values.

A standard brake pad with a steel made backing plate is for example disclosed in US 6 206 151 B1, where a friction pad is disposed on the front surface of the backing plate. The backing plate further includes at the rear surface thereof a groove to facilitate heat dissipation caused by friction between the friction pad and the disc brake rotor of the disc brake assembly. While the groove improves to a certain extent the dissipation of heat by providing a ventilation, the amount of heat dissipation by the groove is still limited. Furthermore, the emission of heat provided by the known prior art arrangement is also unsatisfactory.

Other solutions found in the prior art are modifying the backing plate so that it has a larger cooling surface or adding a radiator to the brake pad, as discussed for instance in DE 10 2011 123 009 B3. In particular, DE 10 2011 123 009 B3 discloses a brake pad made of three components: the backing plate, a plate made of aluminum with a radiator on top and a friction pad. The radiator shown in DE 10 2011 123 009 B3, namely the surface facing out of the backing plate, is not large enough to provide for an efficient solution to the heat dissipation problem. Also, the heat exchange is not sufficient enough, since the air only flows through the radiator fins. Accordingly, the air captures the thermal energy of the radiator but is not able to leave the radiator freely. Therefore, the heat captured by the air is transmitted back to the brake pad. In addition, the emission behavior of the know radiator is not satisfactory, as the radiation of heat occurs by emitting heat from one fin of radiator to another fin thereof, and in this manner the heat does equally not leave the radiator. As generally known in the art, the emission is responsible for up to 25% of total heat exchange of a radiator of the like with the surrounding air.

Various other forms of radiators are used in disclosures like US 10 088 002 B2 which pertains to a device for braking a vehicle including a brake pad, a back plate coupled to the brake pad and a plurality of ridges provided on a face of the brake plate, DE 10 2015 117 607 B4 which pertains to a removable heat-dissipating member for brake pads, DE 20 2016 102 626 U1 which discloses a cooling structure of a bicycle brake comprising a disc, a cooling plate and a cooling element, wherein a channel is formed between the cooling plate and the cooling element, such that air can dissipate heat through the channel, EP 3 604 848 A1 which discloses a pad for a bicycle disc brake, wherein the pad comprises a heat-dissipating element made of a material having a well-defined thermal expansion coefficient, or EP 3 415 411 A2 which pertains to a pad for a bicycle disc brake, comprising at least one heat-dissipating element. All these radiators have very big surfaces facing each other and a small surface facing out of the brake pad making the heat dissipation, in particular the radiative emission of heat, not very effective.

A further brake pad for a bicycle or a motorbike disc brake assembly is known from EP 3 967 585 A1 in the name of the present applicant. The known brake plate comprises a backing plate having a front surface and a rear surface, a friction pad disposed on the front surface or the rear surface of the backing plate, and a backing plate extension extending from the backing plate, wherein the backing plate extension is provided with at least one cutout, wherein the at least one cutout has an inner wall surrounding the cutout, and wherein at least a part of the inner wall is provided at an inclination other than 90° with respect to the area of the backing plate extension adjacent to the cutout. While the latter provides for a better dissipation of heat as compared to the previous discussed prior art, there are still circumstances in which a better and more effective dissipation of heat is required.

In view of the foregoing, it is an object of the present invention to provide for a more effective brake pad for a bicycle or a motorbike disc brake assembly that allows more heat to dissipate from the brake pad.

Within the framework of the above object, the present invention also aims at providing for a more effective brake pad for a bicycle or for a motorbike disc brake assembly with an improved heat dissipation behavior due in particular to the improved heat emission behavior of the brake pad.

Within the above object, the present invention also additionally aims at providing for a more effective brake pad for a bicycle or motorbike disc brake assembly with an improved heat dissipation behavior, in particular as far as convection is concerned.

Within the above object, the present invention also further aims at providing for a more effective brake pad for a bicycle or motorbike disc brake assembly with an improved heat dissipation behavior while minimizing the dissipation surface.

### SUMMARY OF THE INVENTION

The above objects and further objects which will become apparent hereinafter are solved by a brake pad for a bicycle or a motorbike disc brake assembly as defined in independent claim 1. Further advantageous aspects of the present invention are set out in the dependent claims.

The present invention therefore relates in general terms to a brake pad for a bicycle or a motorbike disc brake assembly according to claim 1.

The provision of graphene enhances the heat emission or dissipation due to the advantageous heat conducting characteristics of graphene. It may be provided that only one of the backing plate or the backing plate extension is at least in part coated with the graphene coating, but to increase the favorable heat conducting effect of the graphene coating, a provision of the graphene coating on both elements is preferred.

It may be provided that the backing plate and/or the backing plate extension is/are fully coated with the graphene coating. A provision of a full graphene coating on the entirety of the backing plate and/or the backing plate extension further increases the favorable heat conducting effect of the graphene coating.

It should be understood that in the context of the present invention a partially or fully graphene coated backing plate does not include the area of the backing plate covered with the friction pad containing a friction material. Nevertheless, according to a preferred aspect of the present invention, the friction material of the friction pad may include a graphene powder in the friction pad material composition acting as a friction modifier. The graphene powder replaces advantageously the traditional copper powder/fibers used as a friction modifier and/or thermal conducting agent in the friction material of the friction pad. According to a preferred aspect it is most preferable to fully replace copper powder/fibers with crumpled graphene at 0.5-7% by weight of the total friction pad material weight. Such an arrangement allows to create fully copper free friction material which has improved braking performance and conducts heat to the backing plate in a more efficient manner.

It may be advantageous if the graphene coating on the backing plate and/or on the backing plate extension has a thickness between 2 and 150 µm, preferably between 30 and 70 µm and wherein preferably the thickness of the coating is constant. The term "constant" may include manufacturing tolerances and/or some deviations of the thickness, especially around the edges of the coated part as is known in the art. It is also imaginable that the thickness of the coating varies, but a constant thickness is preferred in view of an easier manufacturing thereof.

Advantageously, the graphene coating comprises a graphene concentration between 1 and 50 % by weight in combination with a liquid binder and a solvent. This range of graphene concentration may be beneficial in terms of heat dissipation and may be varied according to the specific requirements of the bicycle or motorbike.

It may have an advantage if the graphene coating comprises a graphene concentration between 1 and 20 % by weight, a liquid binder concentration between 45 and 55 % by weight and a solvent concentration between 25 and 44 % by weight, preferably a graphene concentration of about 5 % by weight, a liquid binder concentration of about 52 % by weight and a solvent concentration of about 43 % by weight.

Advantageously, the liquid binder is selected from resins like epoxy resin or polyester resin or acrylic resin or polymer resin or synthetic polymer resin or mixtures thereof and that the solvent is a butanone-based solvent. This list should not be understood as strictly limited, as other materials may also be used as liquid binder or solvent as long as the required function is provided.

Further advantageously, the graphene coating comprises a graphene concentration between 1 and 40 % by weight in combination with powder coating components selected from thermosetting resins, curing agents, leveling agents, flow modifiers and metal oxides or from combinations thereof.

Advantageously, the backing plate extension is provided with at least one cutout. The at least one cutout increases the available free surface which can be used both for emission of thermal energy and for convection. Preferably, the cutout or cutouts has/have a shape selected from circular, elliptic, triangular, rectangular, rhombic, pentagonal, hexagonal and polygonal. Currently, a rhombic shape is envisaged as particularly advantageous in terms of the thermal dissipation and of the manufacturing constraints. Tests performed by the inventor have shown that it is advantageous if the cutouts take up 30% to 90% of the surface of the backing plate extension, more preferably if the cutouts take up 50% to 80% of the surface of the backing plate extension or if the cutouts take up 60% to 80% of the surface of the backing plate extension. The latter advantageous embodiment maximizes the surface available to heat dissipation (both in terms of radiation and convection) and also reduces the weight of the backing plate. The graphene coating further synergistically enhances the heat dissipation of the advantageous embodiment.

Preferably, the backing plate and/or the backing plate extension has/have a thickness from 1,5 mm to 2,0 mm, more preferably from 1,5 mm to 1,9 mm and most preferably from 1,5 mm to 1,8 mm.

Even more preferably, the backing plate and the backing plate extension are coplanar and have the same thickness. In alternative the backing plate and/or the backing plate extension may be curved or slightly curved.

In another preferred embodiment of the present invention, the backing plate and/or the backing plate extension are made of metal, preferably of steel, or aluminum. Steel is advantageous in terms of its stability and stiffness and allows to increase or maximize the surface and/or the number of the cutouts. This, in turn, provides for an improved heat dissipation. Aluminum equally allows to maximize the surface and/or the number of the cutouts while being lighter in weight.

Advantageously, the backing plate is substantially rectangular and the friction pad takes up about 70% of the front surface thereof.

Advantageously, the backing plate extension has a generally rectangular configuration with a tip pointing away from the backing plate, such that the portion of the backing plate extension adjacent to the backing plate is wider than the portion of the of the backing plate extension distant to the backing plate. By this particular shape, the heat dissipation behavior, in particular the convection behavior is further improved.

In another preferred embodiment, the backing plate is provided with a leading edge and a trailing edge and the backing plate extension has a generally rectangular configuration. In the latter preferred embodiment, the extent of the backing plate extension between the leading edge and trailing edge is shorter than the extent of the backing plate extension extending away from the backing plate. By this particular shape, the heat dissipation behavior, in particular the convection behavior, is further improved.

Even more preferably, the backing plate extension has a perimeter and at least a part of the perimeter is provided at an inclination other than 90° with respect to the area of the backing plate extension adjacent to the perimeter. In this manner the heat dissipation surface of the backing plate is further increased and in consequence the heat dissipation behavior, in particular the convection behavior, is further improved.

According to a further preferred aspect of the invention, the friction pad may be provided with a friction material comprising a copper-free friction modifier comprising crumpled graphene, preferably a crumpled graphene powder. The crumpled graphene powder replaces advantageously the traditional copper powder/fibers used as a friction modifier in the friction materials of the friction pads. The resulting friction pad advantageously avoids the use of copper and is less polluting the environment, as the friction pad wears.

Another aspect of the invention is a method for manufacturing a coating for the brake pad according to the invention. The method may be at least carried out in the following three alternative ways.

In a first step of alternative 1, the coating is provided in a liquid form, the coating comprising a graphene concentration between 1 and 50 % by weight in combination with a liquid binder and a solvent. In a second step, the coating is sprayed on the brake pad and in a third step, the coating is cured in an oven to evaporate the solvent from the brake pad, so as to harden the coating on the brake plate. In a fourth step, the coating is removed, preferably by grinding, from the friction pad, if necessary.

In a first step of alternative 2, the coating is provided in a liquid form, the coating comprising a graphene concentration between 1 and 50 % by weight in combination with a liquid binder and a solvent. In a second step, the liquid coating is sprayed on the brake pad or the brake pad is dipped into the liquid coating and in a third step, the coating is cured to evaporate the solvent from the brake pad, so as to harden the coating on the brake plate. In a fourth step, the coating is removed, preferably by grinding, from the friction pad, if necessary.

In a first step of alternative 3, a powder comprising a graphene concentration between 1 and 40 % by weight in combination with powder coating components selected from thermosetting resins, curing agents, leveling agents, flow modifiers and metal oxides or from combinations thereof is provided. In a second step, the powder is electrostatically sprayed on the brake pad and in a third step the powder coating is cured to solidify the same. In a fourth step, the coating is removed, preferably by grinding, from the friction pad, if necessary.

Further features and advantages of the present invention will become clearer from the following detailed description of the preferred embodiment thereof, made with reference to the attached drawings.

### DESCRIPTION OF THE DRAWINGS

Fig. 1 is a schematic front view of a brake pad according to the present invention;
Fig. 2 is a schematic lateral side view of the brake pad of Fig. 1;
Fig. 3 is a schematic top side view of the brake pad of Fig. 1;
Fig. 4 is a schematic perspective view at 45° of the brake pad of Fig. 1;
Fig. 5 is a further schematic perspective view of the brake pad of Fig. 1;
Fig. 6 is a schematic perspective cross-section view of the backing plate extension of the brake pad in accordance with the present invention better illustrating the inclination of the cutouts;
Fig. 6a is a sectional view of the brake pad of Fig. 1 taken along the line indicated as 6a-6a in said Fig. 1; and
Fig. 7 is a schematic lateral view of a brake pad in accordance to the present invention installed to a conventional disc brake assembly.

### DETAILED DESCRIPTION OF THE EMBODIMENTS

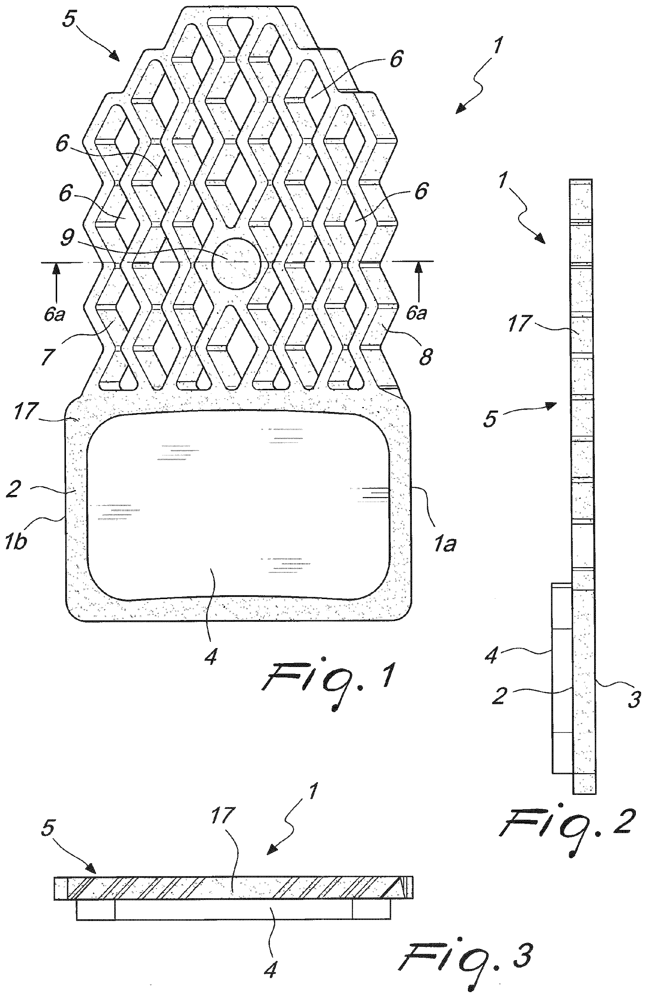

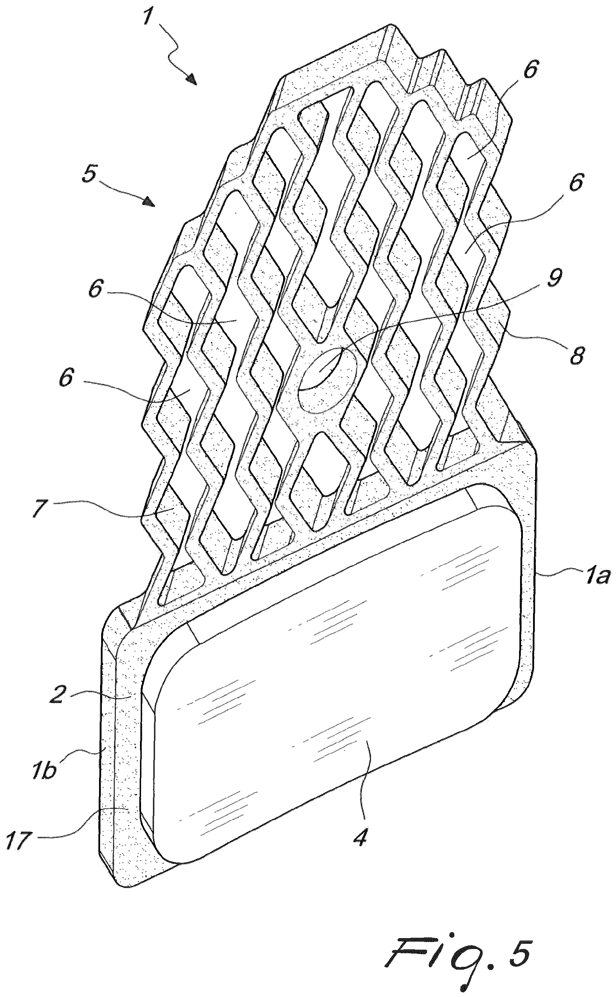

In the following, the present invention will be described in detail in connection with the currently preferred embodiments thereof and with reference to the appended figures 1 to 7.

Basically, the current invention improves brake pads used in particular in bicycles and motorbikes by coating at least the backplate and/or an extension plate of the backplate including cooling fins with a graphene paint or cover. The present inventor found surprisingly that graphene is an excellent heat conductor with a very high thermal conductivity coefficient (much higher than copper). By applying graphene paint or coating to brake pads, the present inventor found that the brake pads of the invention were able to faster transfer away heat to the cooling fins of the extension plate and hence reduce the temperature of the friction pads of the brake. The graphene containing coating of the present invention has a much higher thermal emissivity than bare metal or other paints. Bare metal only has a thermal emissivity of about 0.1e and the graphene paint or coating according to the invention has a thermal emissivity close to 0.85e. Accordingly, such graphene coating can emit much more heat by radiation compared to non-coated or otherwise coated metal. The graphene coating of the invention also displays much bigger forced convective heat transfer as compared to bare metal or otherwise coated metal. Both of these properties have a very big impact on how heat is dissipated from the brake pad and the friction pad supported thereon.

Fig. 1 shows a schematic front view of a brake pad for a bicycle or a motorbike disc brake assembly having a backing plate 1 with a front surface 2 and a rear surface 3 and a friction pad 4 disposed on the front surface 2 or the rear surface 3 of the backing plate 1. Both the backing plate 1 and the friction pad 4 are well known in the art and will not be described in detail hereinafter. The friction pad 4 includes a friction material like for instance a material known under the commercial name of Ferodo which is glued or bonded in a conventional manner to the backing plate 1. Preferably, the friction material of the friction pad 4 may be provided with a copper-free friction modifier comprising graphene, preferably a crumpled graphene powder. The graphene powder replaces advantageously the traditional copper powder/fibers used as a friction modifier in friction pads.

The backing plate 1 has a backing plate extension 5 extending therefrom. As shown in the appended figures, the backing plate 1 has preferably a substantially rectangular shape and the backing plate extension 5 extends from the longer side of the baking plate 1, such that the contact surface of the backing plate extension 5 to the backing plate 1 is larger. This results in a better thermal conduction with a higher transfer of the thermal energy through the direct contact between the backing plate 1 bearing the friction pad 4 and the backing plate extension 5.

In the illustrated embodiment, the backing plate 1 as well as the backing plate extension 5 are fully coated with a graphene coating 17. The application area is shown with the dots 17 and extends in the cutouts 6 which will be described later. Only the area covered by the friction pad 4 is not coated with the graphene coating 17. Accordingly, in the context of the present description a fully coated backing plate 1 does not include the area of the friction pad 4. In fact, the person skilled in the art will appreciate that covering the friction pad with the graphene coating 17 otherwise used, would impair the functionality of the friction material of the friction pad. However, as discussed above, the friction material of the friction pad 4 may include a copper-free friction modifier comprising graphene, preferably a crumpled graphene powder. Obviously, the friction modifier comprising graphene is distinguished from the graphene coating 17.

According to a preferred aspect, the graphene coating 17 has a constant thickness across the area on which it is applied. The thickness of the graphene coating 17 may be provided in the range between 2 and 150 µm, preferably between 30 and 70 µm. The thickness of the graphene coating 17 may vary in the application area, so that it is not constant across the application area.

According to a further preferred aspect, the graphene coating 17 is applied only on the baking plate 1 or only on the backing plate extension 5. The graphene coating 17 may also be applied only partially to the backing plate 1 and/or the backing plate extension 5 with a constant or varying thickness. Applying the graphene coating 17 only to the backing plate extension 5, entirely or in part, has some advantages as the larger potential heat dissipation surface is enhanced by the graphene coating 17. Further, the manufacturing process of the brake pad is rendered simpler, as the graphene coating 17 is limited to the backing plate extension 5 only and the manufacturing process does not require a subsequent grinding step to remove the graphene coating 17 from the area of the friction pad 4.

The graphene coating 17 may comprise a graphene in the form of a powder, wherein the powder comprises flat platelets and/or crumpled platelets of graphene.

The graphene coating 17 may comprise a graphene concentration between 1 and 50 % by weight in combination with a liquid binder and a solvent.

It may have an advantage if the graphene coating 17 comprises a graphene concentration between 1 and 20 % by weight, a liquid binder concentration between 45 and 55 % by weight and a solvent concentration between 25 and 44 % by weight, preferably a graphene concentration of about 5 % by weight, a liquid binder concentration of about 52 % by weight and a solvent concentration of about 43 % by weight.

It is further conceivable and advantageous that the liquid binder is selected from resins like epoxy resin or polyester resin or acrylic resin or polymer resin or synthetic polymer resin or mixtures thereof and that the solvent is a butanone-based solvent. This list should not be understood as strictly limited, as other materials may also be used as liquid binder or solvent as long as the required function is provided.

Further, advantageously, the graphene coating may comprise a graphene concentration between 1 and 40 % by weight in combination with powder coating components selected from thermosetting resins, curing agents, leveling agents, flow modifiers and metal oxides or from combinations thereof.

The graphene may be advantageously applied in one of the three alternatives of the method for manufacturing a coating for the brake pad according to the invention.

In a first step of a first manufacturing method, the coating is provided in a liquid form, the coating comprising a graphene concentration between 1 and 50 % by weight in combination with a liquid binder and a solvent. In a second step, the coating is sprayed on the brake pad and in a third step, the coating is cured to evaporate the solvent from the brake pad, so as to harden the coating on the brake plate. In a fourth step, the coating is removed, preferably by grinding, from the friction pad if necessary.

In a first step of a second manufacturing method, the coating is provided in a liquid form, the coating comprising a graphene concentration between 1 and 50 % by weight in combination with a liquid binder and a solvent. In a second step, the liquid coating is sprayed on the brake pad or the brake pad is dipped into the liquid coating and in a third step, the coating is cured to evaporate the solvent from the brake pad, so as to harden the coating on the brake plate. In a fourth step, the coating is removed, preferably by grinding, from the friction pad if necessary.

In a first step of alternative 3, a powder comprising a graphene concentration between 1 and 40 % by weight in combination with powder coating components selected from thermosetting resins, curing agents, leveling agents, flow modifiers and metal oxides or from combinations thereof is provided. In a second step, the powder is electrostatically sprayed on the brake pad and in a third step the powder coating is cured to solidify the same. In a fourth step, the coating is removed, preferably by grinding, from the friction pad if necessary.

Nevertheless, the person skilled in the art will appreciate that alternative methods may be available, although less advantageous.

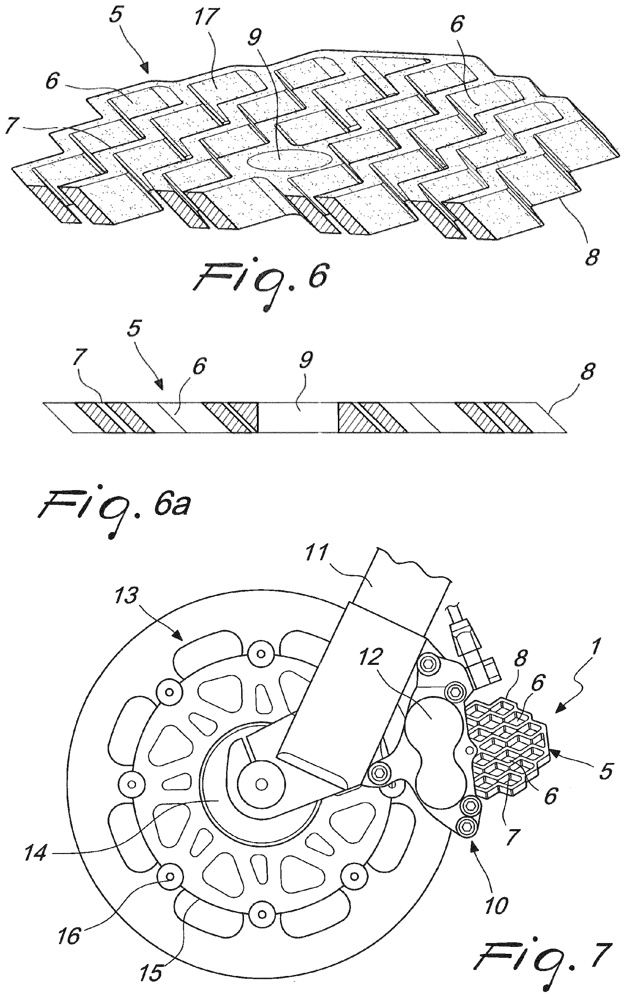

The backing plate extension 5 is provided advantageously with at least one cutout 6, and the at least one cutout 6 has an inner wall 7 surrounding the cutout 6. As best visible from Fig. 6, at least a part of the inner wall 7 is provided at an inclination other than 90° with respect to the area of the backing plate extension 5 adjacent to the cutout 6. In this way, even if the backing plate extension 5 is not planar, the cutout is at least locally inclined as compared to the adjacent portion of the backing plate extension 5. In other words, in the present description, the area of the backing plate extension adjacent to a cutout 6 can be regarded as partially generally planar and the inclination of the inner walls 7 of the cutout 6 other than 90° is referred only to that area adjacent to the cutout. To the extent that the backing plate extension 5 is planar, the inclination can be referred to the backing plate extension 5 in its entirety.

Preferably, as shown in the appended figures, the backing plate extension 5 is provided with a plurality of cutouts 6 and each cutout 6 has a respective inner wall 7 surrounding the cutout 6. As in the case of a single cutout, at least a part of each respective inner wall 7 is provided at an inclination other than 90° with respect to the area of the backing plate extension 5 adjacent to the respective cutout 6. The cutouts 6 may be obtained by laser cutting. However, also alternative manufacturing methods like punching, stamping or casting can be envisaged.

Yet again, as best visible from Fig. 6, at least a part of the inner wall 7 is provided at an inclination other than 90° with respect to the area of the backing plate extension 5 adjacent to the respective cutout 6. In this way, even if the backing plate extension 5 is not planar, any cutout is at least locally inclined as compared to the adjacent portion of the backing plate extension 5. In other words, in the present description, the area adjacent to a respective cutout 6 can be regarded as partially generally planar and the inclination of the inner walls 7 of the respective cutout 6 other than 90° is referred only to the area adjacent to the respective cutout. Yet again, to the extent that the backing plate extension 5 is planar, the inclination can be referred to the backing plate extension 5 in its entirety.

As shown in the appended figures, preferably, the backing plate extension 5 is planar and preferably the inclination of at least a part of each inner wall 7 is the same. The manufacturing constraints are simplified, if all inner walls 7 have the same inclination and if the backing plate extension 5 and preferably also the backing plate 4 are planar. The latter embodiment is particularly advantageous if the cutouts 6 are obtained by laser cutting. However, also alternative manufacturing methods like punching, stamping or casting can be envisaged.

The inclination of the cutouts 6 is preferably from 30° to 60°, more preferably from 40° to 50° and most preferably of about 45° with respect to the backing plate extension 5. In this manner, the radiation of heat between opposing inner wall sections is minimized and the emission of heat is directed substantially away from an opposing inner wall section. It will be appreciated by the person skilled in the art that the most preferred angle of 45° directs the radiation of heat and thus the emission to the largest extent away from an opposing inner wall section. Similar considerations apply for the increase of surface of the backing plate extension 5 for the purpose of a better convection, as more surface area is available for the circulation of air. Fig. 6a shows the most preferred angle of 45° of the inner walls 7 of the cutouts 6 and the perimeter 8 in the sectional view taken along the line 6a-6a of Fig. 1. The connecting bolt hole 9 has perpendicular walls extending at an angle of 90°.

As shown in the figures, the cutouts 6 have a rhombic shape which, for the time being, has been considered the most preferred shape in terms of thermal dissipation and/or manufacturing constrains. However, in alternative, the cutouts 6 may have a shape selected from circular, elliptic, triangular, rectangular, pentagonal, hexagonal and polygonal.

Advantageously the backing plate 1 and/or the backing plate extension 5 has/have a thickness from 1,5 mm to 2,0 mm, more preferably from 1,5 mm to 1,9 mm and most preferably from 1,5 mm to 1,8 mm. Such dimension, in particular in conjunction with a steel made backing plate and/or backing plate extension are advantageous in terms of stability and stiffness on one hand and overall size on the other.

In the currently preferred embodiment, as shown in the appended figures, the backing plate 1 and the backing plate extension 5 are coplanar and have the same thickness. However, the backing plate 1 and/or the backing plate extension 5 may also be curved or slightly curved. In particular, a curved or slightly curved backing plate extension 5 increases the surface available to thermal dissipation as compared to a planar backing plate extension 5 having the same radial extension in the mounted state thereof.

As discussed hereinabove, the backing plate 1 and/or the backing plate extension 5 are made of metal, preferably of steel. However, also alternative materials like aluminum, aluminum alloys or magnesium alloys are conceivable.

As shown in Fig. 1, the backing plate 1 is substantially rectangular and the friction pad 4 takes up about 70% of the front surface 2 thereof. In this manner, a good thermal contact is established between the backing plate 1 and the friction pad 4.

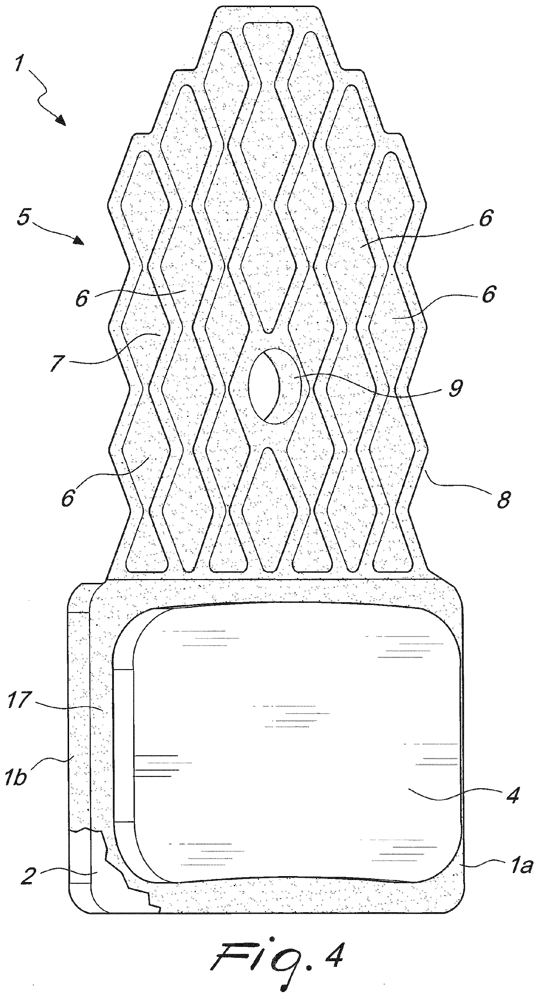

With reference to Fig. 1 and 4 the backing plate extension 5 may include a connecting bolt hole 9 for mounting the brake pad to a brake caliper which is shown in Fig. 7. The function of the connecting bolt hole 9 is well known to a person skilled in the art and will not be discussed in detail herein.

Advantageously, the inclination of the inner wall 7 of the cutout 6 is such that the opposing sections of the inner wall 7 of the cutout 6 only partially face each other or do not face each other at all. Therefore, the radiation or emission of thermal energy from any section of the inner wall 7 does not impinge or only slightly impinges on an opposing inner wall section. In other words, the inclination of the inner wall 7 of the cutout 6 is such that the inner wall 7 has a section which directs the radiation heat in part or fully away from the opposing section of the inner wall 7.

With reference to Fig. 7 there is shown a backing plate 1, wherein the backing plate extension 5 extends out of a brake caliper 12 in the mounted state thereof in a radial extension as compared to a wheel on which the brake pad is mounted. The extension out of a brake caliper 12 is preferably in the order of 10 mm to 60 mm. As the caliper 12 along with the disc brake assembly 10 are conventional and well known in the art, the same will not be described in detail hereinafter. For the sake of completeness, it should be noted that the disc brake assembly 10 includes, apart from the disk brake caliper 12, a disc brake rotor 13 and a hub 14. Further, optionally the diss brake assembly 10 may include a disc brake spider 15 and rivets 16 therefore.

As shown in the appended figures, the backing plate extension 5 has a generally rectangular configuration with a tip pointing away from the backing plate 1, such that the portion of the backing plate extension 5 adjacent to the backing plate 1 is wider than the portion of the backing plate extension 5 distant to the backing plate 1. In this manner the overall dissipation of heat of the brake pad of the present invention may be advantageously improved.

Further, as also shown in the appended figures, the backing plate 1 has a leading edge 1a and a trailing edge 1b, as compared to the direction of rotation of the disc brake rotor. The backing plate extension 5 has a generally rectangular configuration and the extent of the backing plate extension 5 between the leading edge 1a and trailing edge 1b is shorter than the extent of the backing plate extension 5 extending away from the backing plate 1. In this manner the overall dissipation of heat of the brake pad of the present invention may be advantageously improved.

The backing plate extension 5 has a perimeter 8 and at least a part of the perimeter 8 is advantageously provided at an inclination other than 90° with respect to the area of the backing plate extension 5 adjacent to the perimeter 8. The inclined perimeter also advantageously contributes to the increase of the thermal dissipation of the brake pad according to the present invention.

Preferably the backing plate extension 5 is planar and the inclination of the perimeter 8 is the same as the inclination of the inner wall 7.

According to an advantageous aspect, the cutouts 6 take up 30% to 90% of the surface of the backing plate extension 5, more preferably 50% to 80% of the surface of the backing plate extension 5 or up 60% to 80% of the surface of the backing plate extension 5. The latter cutout extension maximizes the surface available to heat dissipation both in terms of emission and convection and also reduces the weight of the backing plate extension.

The present invention fulfills all above objects and provides for the discussed beneficial effects. Such beneficial effects are illustrated by the experimental example below, wherein the inventor has used a testing rig as described below to conduct braking tests. The testing rig was devised for the simulation of typical cyclist behavior when descending a long downhill. Usually in such conditions cyclist will "drag" the brakes constantly for several minutes to reduce the speed. Hence, a flywheel was used that was rotating at constant speed of 25km/h and applied constant braking force to the brake level of 14N. The testing rig also included a cooling fan blowing at the same speed as the rotating flywheel to imitate the real-world wind blow during riding. The test was conducted for 8 minutes of continuous braking. At the end of the test the thermal imagery of the setup was captured using the same type of brake pads, wherein one was fully coated with graphene paint and the other was not coated at all. Otherwise, the brake pads were identical. From the acquired images, it was clear that the brake caliper temperature was much lower (over 100deg C difference) where the brake pads with graphene coating were used. The above test proved that the graphene paint or coating played a very beneficial role in cooling the brake pads and hence preventing brake fading and brake fluid boiling.

The present invention includes all modifications and equivalents of the subject matter recited in the claims appended hereto as permitted by applicable law. Moreover, any combination of the above-described elements in all possible variations thereof is encompassed by the invention unless indicated otherwise herein.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realize the invention may be embodied in other specific forms without departing from the scope of the invention as defined by the appended claims. The foregoing embodiments are therefore to be considered illustrative rather than limiting to the invention described herein in all respects. The scope of the invention is thus indicated by the appended claims, rather than the foregoing description, and all changes that come within the meaning and range of equivalence of the claims are therefore intended to be embraced therein.

### LIST OF REFERENCE NUMERALS

- 1: backing plate
- 1a b: leading edge of the backing plate
- 1: trailing edge of the backing plate
- 2: front surface of backing plate
- 3: rear surface of backing plate
- 4: friction pad
- 5: backing plate extension
- 6: cutout(s)
- 7: inner wall of cutout
- 8: perimeter of the backing plate extension
- 9: connecting bolt hole
- 10: disk brake assembly
- 11: front fork
- 12: disc brake caliper
- 13: disc brake rotor
- 14: hub
- 15: disc brake spider
- 16: rivets
- 17: graphene coating

## Claims

1. A brake pad for a bicycle or a motorbike disc brake assembly comprising:
a backing plate (1) having a front surface (2) and a rear surface (3),
a friction pad (4) disposed on the front surface (2) or the rear surface (3) of the backing plate (1), and
a backing plate extension (5) formed in one piece with or adjacently attached to the backing plate (1), **characterized in that**
at least a part of the backing plate (1) and/or at least part of the backing plate extension (5) is coated with a graphene coating (17), and **in that**
the graphene coating (17) comprises graphene as crumpled platelets or crumpled platelets in combination with flat platelets.

2. The brake pad according to claim 1, wherein the backing plate (1) and/or the backing plate extension (5) is/are fully coated with the graphene coating (17).

3. The brake pad according to claim 1 or 2, wherein the graphene coating (17) on the backing plate (1) and/or on the backing plate extension (5) has a thickness between 2 and 150 µm, preferably between 30 and 70 µm and wherein preferably the thickness of the coating (17) is constant.

4. The brake pad according to one or more of the preceding claims 1 to 3, wherein the graphene coating (17) comprises a graphene concentration between 1 and 50 % by weight in combination with a liquid binder and a solvent.

5. The brake pad according to claim 4, wherein the graphene coating (17) comprises a graphene concentration between 1 and 20 % by weight, a liquid binder concentration between 45 and 55 % by weight and a solvent concentration between 25 and 44 % by weight, preferably a graphene concentration of about 5 % by weight, a liquid binder concentration of about 52 % by weight and a solvent concentration of about 43 % by weight.

6. The brake pad according to claim 5, wherein the liquid binder is selected from resins like epoxy resin or polyester resin or acrylic resin or polymer resin or synthetic polymer resin or mixtures thereof and wherein the solvent is a butanone-based solvent.

7. The brake pad according to one or more of the preceding claims 1 to 3, wherein the graphene coating (17) comprises a graphene concentration between 1 and 40 % by weight in combination with powder coating components selected from thermosetting resins, curing agents, leveling agents, flow modifiers and metal oxides or from combinations thereof.

8. The brake pad according to one or more of the preceding claims, wherein the backing plate extension (5) is provided with at least one cutout (6),
wherein preferably the at least one cutout (6) or at least one of the cutouts (6) has a shape selected from circular, elliptic, triangular, rectangular, rhombic, pentagonal, hexagonal and polygonal and/or
wherein preferably the at least one cutout (6) takes up 30% to 90% of the surface of the backing plate extension (5), more preferably wherein the at least one cutout (6) takes up 50% to 80% of the surface of the backing plate extension (5) or wherein the at least one cutout (6) takes up 60% to 80% of the surface of the backing plate extension (5).

9. The brake pad according to one or more of the preceding claims, wherein the backing plate (1) and/or the backing plate extension (5) has/have a thickness from 1,5 mm to 2,0 mm, more preferably from 1,5 mm to 1,9 mm and most preferably from 1,5 mm to 1,8 mm.

10. The brake pad according to one or more of the preceding claims, wherein the backing plate (1) and the backing plate extension (5) are coplanar and have the same thickness or wherein the backing plate (1) and/or the backing plate extension (5) are slightly curved; and/or
wherein the backing plate (1) is substantially rectangular and the friction pad (4) takes up about 70% of the front surface (2) or rear surface (3) thereof; and/or
wherein the friction pad (4) is copper free, the friction pad (4) comprising a friction modifier comprising crumpled graphene, preferably a crumpled graphene at 0.5-7% by weight of the total weight of the material of the friction pad (4).

11. The brake pad according to one or more of the preceding claims, wherein the backing plate (1) and/or the backing plate extension (5) are made of metal, preferably of steel or aluminum.

12. The brake pad according to one or more of the preceding claims, wherein the backing plate extension (5) has a generally rectangular configuration with a tip pointing away from the backing plate (1), such that the portion of the of the backing plate extension (5) adjacent to the backing plate (1) is wider than the portion of the of the backing plate extension (5) distant to the backing plate (1); and/or
wherein the backing plate (1) is provided with a leading edge (1a) and a trailing edge (1b), wherein the backing plate extension (5) has a generally rectangular configuration, and wherein the extent of the backing plate extension (5) between the leading edge (1a) and trailing edge (1b) is shorter than the extent of the backing plate extension (5) extending away from the backing plate (1); and/or
wherein the backing plate extension (5) has a perimeter (8) and wherein at least a part of the perimeter (8) is provided at an inclination other than 90° with respect to the area of the backing plate extension (5) adjacent to the perimeter (8).

13. A method for manufacturing a coating for the brake pad according to one or more of the preceding claims 1 to 12, comprising the following steps:
providing the coating in a liquid form, the coating comprising a graphene concentration between 1 and 50 % by weight in combination with a liquid binder and a solvent, the graphene comprising graphene as crumpled platelets or crumpled platelets in combination with flat platelets;
spraying the coating on at least a part of the backing plate (1) and/or on at least part of the backing plate extension (5);
curing the coating to evaporate the solvent from the brake pad, so as to harden the coating on the brake plate; and
optionally removing the coating, preferably by grinding, from the friction pad.

14. A method for manufacturing a coating for the brake pad according to one or more of the preceding claims 1 to 12, comprising the following steps:
providing the coating in a liquid form, the coating comprising a graphene concentration between 1 and 50 % by weight in combination with a liquid binder and a solvent, the graphene comprising graphene as crumpled platelets or crumpled platelets in combination with flat platelets;
spraying the liquid coating on the brake pad or dipping the brake pad into the liquid coating, such that at least a part of the backing plate (1) and/or on at least part of the backing plate extension (5) is coated;
curing the liquid coating to evaporate the solvent from the brake pad, so as to harden the coating on the brake plate; and
optionally removing the coating, preferably by grinding, from the friction pad.

15. A method for manufacturing a coating for brake pad according to one or more of the preceding claims 1 to 1 12, comprising the following steps:
providing a powder comprising a graphene concentration between 1 and 40 % by weight in combination with powder coating components selected from thermosetting resins, curing agents, leveling agents, flow modifiers and metal oxides or from combinations thereof, the graphene comprising graphene as crumpled platelets or crumpled platelets in combination with flat platelets;
electrostatically spraying the powder on at least a part of the backing plate (1) and/or on at least part of the backing plate extension (5);
curing the powder coating to solidify the same; and
optionally removing the coating, preferably by grinding, from the friction pad.

## Patentansprüche

1. Ein Bremsklotz für eine Fahrrad- oder Motorradscheibenbremsanordnung, der Folgendes umfasst:
eine Grundplatte (1) mit einer vorderen (2) und einer hinteren Oberfläche (3),
einen Bremsbelag (4), angebracht auf der vorderen (2) oder hinteren Oberfläche (3) der Grundplatte (1), und
eine Grundplattenverlängerung (5), einteilig mit der Grundplatte (1) geformt oder angrenzend an ihr befestigt;
**dadurch gekennzeichnet, dass**
mindestens ein Teil der Grundplatte (1) und/oder mindestens ein Teil der Grundplattenverlängerung (5) mit einer Graphenschicht (17) beschichtet ist, und dadurch, dass
die Graphenschicht (17) Graphen in Form zerknautschter Plättchen oder zerknautschter Plättchen in Kombination mit flachen Plättchen umfasst.

2. Der Bremsklotz gemäß Anspruch 1, wobei die Grundplatte (1) und/oder die Grundplattenverlängerung (5) vollständig mit der Graphenschicht (17) beschichtet ist/sind.

3. Der Bremsklotz gemäß Anspruch 1 oder 2, wobei die Graphenschicht (17) auf der Grundplatte (1) und/oder auf der Grundplattenverlängerung (5) eine Dicke zwischen 2 und 150 µm, vorzugsweise zwischen 30 und 70 µm, hat und wobei die Dicke der Schicht (17) vorzugsweise konstant ist.

4. Der Bremsklotz gemäß einem oder mehreren der obigen Ansprüche 1 bis 3, wobei die Graphenschicht (17) eine Graphenkonzentration zwischen 1 und 50 Gewichtsprozent in Kombination mit einem flüssigen Bindemittel und einem Lösungsmittel umfasst.

5. Der Bremsklotz gemäß Anspruch 4, wobei die Graphenschicht (17) eine Graphenkonzentration zwischen 1 und 20 Gewichtsprozent, eine Bindemittelkonzentration zwischen 45 und 55 Gewichtsprozent und eine Lösungsmittelkonzentration zwischen 25 und 44 Gewichtsprozent, vorzugsweise eine Graphenkonzentration von ungefähr 5 Gewichtsprozent, eine Bindemittelkonzentration von ungefähr 52 Gewichtsprozent und eine Lösungsmittelkonzentration von ungefähr 43 Gewichtsprozent, umfasst.

6. Der Bremsklotz gemäß Anspruch 5, wobei das flüssige Bindemittel gewählt ist aus Harzen, wie Epoxidharz, Polyesterharz, Acrylharz, Polymerharz, Kunstharz oder Mischungen davon, und wobei das Lösungsmittel ein Lösungsmittel auf Butanonbasis ist.

7. Der Bremsklotz gemäß einem oder mehreren der obigen Ansprüche 1 bis 3, wobei die Graphenschicht (17) eine Graphenkonzentration zwischen 1 und 40 Gewichtsprozent in Kombination mit Pulverbeschichtungskomponenten umfasst, die gewählt sind aus Duroplasten, Härtemitteln, Egalisierern, Verlaufmitteln und Metalloxiden, oder aus Kombinationen davon.

8. Der Bremsklotz gemäß einem oder mehreren der obigen Ansprüche, wobei die Grundplattenverlängerung (5) mit mindestens einer Aussparung (6) versehen ist,
wobei die mindestens eine Aussparung (6) oder mindestens eine der Aussparungen (6) eine Form hat, die gewählt ist aus kreisförmig, elliptisch, dreieckig, rechteckig, rhombenförmig, fünfeckig, sechseckig und vieleckig, und/oder
wobei die mindestens eine Aussparung (6) vorzugsweise 30% bis 90% der Oberfläche der Grundplattenverlängerung (5) einnimmt, wobei die mindestens eine Aussparung (6) stärker bevorzugt 50% bis 80% der Oberfläche der Grundplattenverlängerung (5) einnimmt oder wobei die mindestens eine Aussparung (6) 60% bis 80% der Oberfläche der Grundplattenverlängerung (5) einnimmt.

9. Der Bremsklotz gemäß einem oder mehreren der obigen Ansprüche, wobei die Grundplatte (1) und/oder die Grundplattenverlängerung (5) eine Dicke von 1,5 mm bis 2,0mm, stärker bevorzugt von 1,5 mm bis 1,9 mm und am stärksten bevorzugt von 1,5 mm bis 1,8 mm hat/haben.

10. Der Bremsklotz gemäß einem oder mehreren der obigen Ansprüche, wobei die Grundplatte (1) und die Grundplattenverlängerung (5) koplanar sind und dieselbe Dicke haben, oder wobei die Grundplatte (1) und/oder die Grundplattenverlängerung (5) leicht gekrümmt sind; und/oder wobei die Grundplatte (1) im Wesentlichen rechteckig ist und der Bremsbelag (4) ungefähr 70% der vorderen Oberfläche (2) oder der hinteren Oberfläche (3) derselben einnimmt; und/oder
wobei der Bremsbelag (4) frei von Kupfer ist, wobei der Bremsbelag (4) einen Reibungsmodifizierer umfasst, der zerknautschtes Graphen, vorzugsweise ein zerknautschtes Graphen in einer Menge von 0,5-7 Gewichtsprozent des Gesamtgewichts des Materials des Bremsbelags (4), umfasst.

11. Der Bremsklotz gemäß einem oder mehreren der obigen Ansprüche, wobei die Grundplatte (1) und/oder die Grundplattenverlängerung (5) aus Metall, vorzugsweise Stahl oder Aluminium, hergestellt sind.

12. Der Bremsklotz gemäß einem oder mehreren der obigen Ansprüche, wobei die Grundplattenverlängerung (5) eine im Allgemeinen rechteckige Konfiguration hat, mit einer Spitze, die von der Grundplatte (1) abgewandt ist, so dass der Abschnitt der Grundplattenverlängerung (5), der an die Grundplatte (1) angrenzt, breiter ist als der Abschnitt der Grundplattenverlängerung (5), der von der Grundplatte (1) entfernt ist; und/oder
wobei die Grundplatte (1) mit einer Vorderkante (1a) und mit einer Hinterkante (1b) versehen ist, wobei die Grundplattenverlängerung (5) eine im Allgemeinen rechteckige Konfiguration hat und wobei die Ausdehnung der Grundplattenverlängerung (5) zwischen der Vorderkante (1a) und der Hinterkante (1b) kürzer ist als die Ausdehnung der Grundplattenverlängerung (5), die sich von der Grundplatte (1) fort erstreckt; und/oder
wobei die Grundplattenverlängerung (5) eine Peripherie (8) hat und wobei mindestens ein Teil der Peripherie (8) in einer Neigung zu dem Bereich der Grundplattenverlängerung (5) angrenzend an die Peripherie (8) angeordnet ist, die nicht 90° beträgt.

13. Ein Verfahren zur Herstellung einer Beschichtung für den Bremsklotz gemäß einem oder mehreren der obigen Ansprüche 1 bis 12, das folgende Schritte umfasst:
das Bereitstellen der Beschichtung in flüssiger Form, wobei die Beschichtung eine Graphenkonzentration zwischen 1 und 50 Gewichtsprozent in Kombination mit einem flüssigen Bindemittel und einem Lösungsmittel umfasst, wobei das Graphen Graphen in Form zerknautschter Plättchen oder zerknautschter Plättchen in Kombination mit flachen Plättchen umfasst;
das Aufsprühen der Beschichtung auf mindestens einen Teil der Grundplatte (1) und/oder auf mindestens einen Teil der Grundplattenverlängerung (5);
das Härten der Beschichtung, um das Lösungsmittel vom Bremsklotz verdunsten zu lassen und so die Beschichtung auf dem Bremsring zu härten; und
wahlweise das Entfernen der Beschichtung, vorzugsweise durch Schleifen, von dem Bremsbelag.

14. Ein Verfahren zur Herstellung einer Beschichtung für den Bremsklotz gemäß einem oder mehreren der obigen Ansprüche 1 bis 12, das folgende Schritte umfasst:
das Bereitstellen der Beschichtung in flüssiger Form, wobei die Beschichtung eine Graphenkonzentration zwischen 1 und 50 Gewichtsprozent in Kombination mit einem flüssigen Bindemittel und einem Lösungsmittel umfasst, wobei das Graphen Graphen in Form zerknautschter Plättchen oder zerknautschter Plättchen in Kombination mit flachen Plättchen umfasst;
das Aufsprühen der flüssigen Beschichtung auf den Bremsklotz oder das Eintauchen des Bremsklotzes in die flüssige Beschichtung, so dass mindestens ein Teil der Grundplatte (1) und/oder mindestens ein Teil der Grundplattenverlängerung (5) beschichtet werden;
das Härten der flüssigen Beschichtung, um das Lösungsmittel vom Bremsklotz verdunsten zu lassen, um die Beschichtung auf dem Bremsring zu härten; und
wahlweise das Entfernen der Beschichtung, vorzugsweise durch Schleifen, von dem Bremsbelag.

15. Ein Verfahren zur Herstellung einer Beschichtung für den Bremsklotz gemäß einem oder mehreren der obigen Ansprüche 1 bis 12, das folgende Schritte umfasst:
das Bereitstellen eines Pulvers, das eine Graphenkonzentration zwischen 1 und 40 Gewichtsprozent in Kombination mit Pulverbeschichtungskomponenten umfasst, die gewählt sind aus Duroplasten, Härtemitteln, Egalisierern, Verlaufmitteln und Metalloxiden, oder aus Kombinationen davon, wobei das Graphen Graphen in Form zerknautschter Plättchen oder zerknautschter Plättchen in Kombination mit flachen Plättchen umfasst;
das elektrostatische Spritzen des Pulvers auf mindestens einen Teil der Grundplatte (1) und/oder auf mindestens einen Teil der Grundplattenverlängerung (5);
das Härten der Pulverbeschichtung, um diese zu verfestigen; und
wahlweise das Entfernen der Beschichtung, vorzugsweise durch Schleifen, vom Bremsbelag.

## Revendications

1. Une plaquette de frein pour un ensemble de frein à disque de bicyclette ou de moto comprenant:
une plaque de support (1) ayant une surface avant (2) et une surface arrière (3),
une plaquette de friction (4) disposée sur la surface avant (2) ou la surface arrière (3) de la plaque de support (1), et
une extension de plaque de support (5) formée d'un seul tenant avec la plaque de support (1) ou fixée de manière adjacente à celle-ci, **caractérisée en ce que**
au moins une partie de la plaque de support (1) et/ou au moins une partie de l'extension de plaque de support (5) est recouverte d'un revêtement en graphène (17), et **en ce que**
le revêtement en graphène (17) comprend du graphène sous forme de plaquettes froissées ou de plaquettes froissées en combinaison avec des plaquettes plates.

2. La plaquette de frein selon la revendication 1, où la plaque de support (1) et/ou l'extension de plaque de support (5) est/sont entièrement recouverte(s) du revêtement en graphène (17).

3. La plaquette de frein selon la revendication 1 ou 2, où le revêtement en graphène (17) sur la plaque de support (1) et/ou sur l'extension de la plaque de support (5) a une épaisseur comprise entre 2 et 150 µm, de préférence entre 30 et 70 µm, et où, de préférence, l'épaisseur du revêtement (17) est constante.

4. La plaquette de frein selon une ou plusieurs des revendications 1 à 3 précédentes, où le revêtement en graphène (17) comprend une concentration en graphène comprise entre 1 et 50 % en poids en combinaison avec un liant liquide et un solvant.

5. La plaquette de frein selon la revendication 4, où le revêtement en graphène (17) comprend une
concentration en graphène comprise entre 1 et 20 % en poids, une concentration en liant liquide comprise entre 45 et 55 % en poids et une concentration en solvant comprise entre 25 et 44 % en poids, de préférence une concentration en graphène d'environ 5 % en poids, une concentration en liant liquide d'environ 52 % en poids et une concentration en solvant d'environ 43 % en poids.

6. La plaquette de frein selon la revendication 5, où le liant liquide est choisi parmi des résines telles que la résine époxy ou la résine polyester ou la résine acrylique ou la résine polymère ou la résine polymère synthétique ou des mélanges de celles-ci, et où le solvant est un solvant à base de butanone.

7. La plaquette de frein selon une ou plusieurs des revendications 1 à 3 précédentes, où le revêtement de graphène (17) comprend une concentration en graphène comprise entre 1 et 40 % en poids en combinaison avec des composants de revêtement en poudre choisis parmi les résines thermodurcissables, les agents de durcissement, les agents de nivellement, les modificateurs d'écoulement et les métaux oxydes ou parmi des combinaisons de ceux-ci.

8. La plaquette de frein selon une ou plusieurs des revendications précédentes, où l'extension de la plaque de support (5) est pourvue d'au moins une découpe (6),
où, de préférence, la au moins une découpe (6) ou au moins l'une des découpes (6) a une forme choisie parmi circulaire, elliptique, triangulaire, rectangulaire, rhombique, pentagonale, hexagonale et polygonale et/ou
où, de préférence, la au moins une découpe (6) occupe 30 % à 90 % de la surface de l'extension de la plaque de support (5), de préférence où la au moins une découpe (6) occupe 50 % à 80 % de la surface de l'extension de la plaque de support (5) ou où la au moins une découpe (6) occupe 60 % à 80 % de la surface de l'extension de la plaque de support (5).

9. La plaquette de frein selon une ou plusieurs des revendications précédentes, où la plaque de support (1) et/ou l'extension de la plaque de support (5) ont une épaisseur comprise entre 1,5 mm et 2,0 mm, de préférence entre 1,5 mm et 1,9 mm et de préférence entre 1,5 mm et 1,8 mm.

10. La plaquette de frein selon une ou plusieurs des revendications précédentes, où la plaque de support (1) et l'extension de la plaque de support (5) sont coplanaires et ont la même épaisseur, ou où la plaque de support (1) et/ou l'extension de la plaque de support (5) sont légèrement incurvés; et/ou
où la plaque de support (1) est sensiblement rectangulaire et la plaquette de friction (4) occupe environ 70 % de la surface avant (2) ou de la surface arrière (3) de celle-ci;
et/ou où la plaquette de friction (4) est exempte de cuivre, la plaquette de friction (4) comprenant un modificateur de friction comprenant du graphène froissé, de préférence du graphène froissé à raison de 0,5 à 7 % en poids du poids total du matériau de la plaquette de friction (4).

11. Plaquette de frein selon une ou plusieurs des revendications précédentes, où la plaque de support (1) et/ou l'extension de la plaque de support (5) sont en métal, de préférence en acier ou en aluminium.

12. La plaquette de frein selon une ou plusieurs des revendications précédentes, où l'extension de la plaque de support (5) a une configuration généralement rectangulaire avec une pointe s'éloignant de la plaque de support (1), de telle sorte que la partie de l'extension de la plaque de support (5) adjacente à la plaque de support (1) est plus large que la partie de l'extension de la plaque de support (5) éloignée de la plaque de support (1); et/ou
où la plaque de support (1) est pourvue d'un bord avant (1a) et d'un bord arrière (1b), où l'extension de la plaque de support (5) a une configuration généralement rectangulaire, et où l'étendue de l'extension de la plaque de support (5) entre le bord avant (1a) et le bord arrière (1b) est plus courte que l'étendue de l'extension de la plaque de support (5) s'étendant à l'opposé de la plaque de support (1); et/ou
où l'extension de plaque de support (5) a un périmètre (8) et où au moins une partie du périmètre (8) est prévue à une inclinaison autre que 90° par rapport à la zone de l'extension de plaque de support (5) adjacente au périmètre (8).

13. Procédé de fabrication d'un revêtement pour plaquette de frein selon une ou plusieurs des revendications 1 à 12 précédentes, comprenant les étapes suivantes :
fournir le revêtement sous forme liquide, le revêtement comprenant une concentration en graphène comprise entre 1 et 50 % en poids en combinaison avec un liant liquide et un solvant, le graphène comprenant du graphène sous forme de plaquettes froissées ou de plaquettes froissées en combinaison avec des plaquettes plates;
pulvériser le revêtement sur au moins une partie de la plaque de support (1) et/ou sur au moins une partie de l'extension de la plaque de support (5);
durcir le revêtement pour évaporer le solvant de la plaquette de frein, de manière à durcir le revêtement sur la plaque de frein; et
éventuellement retirer le revêtement, de préférence par meulage, de la plaquette de friction.

14. Procédé de fabrication d'un revêtement pour la plaquette de frein selon une ou plusieurs des revendications 1 à 12 précédentes, comprenant les étapes suivantes:
fournir le revêtement sous forme liquide, le revêtement comprenant une concentration en graphène comprise entre 1 et 50 % en poids en combinaison avec un liant liquide et un solvant, le graphène comprenant du graphène sous forme de plaquettes froissées ou de plaquettes froissées en combinaison avec des plaquettes plates;
pulvériser le revêtement liquide sur la plaquette de frein ou tremper la plaquette de frein dans le revêtement liquide, de telle sorte qu'au moins une partie de la plaque de support (1) et/ou au moins une partie de l'extension de la plaque de support (5) soit recouverte;
durcir le revêtement liquide pour évaporer le solvant de la plaquette de frein, de manière à durcir le revêtement sur la plaque de frein; et
éventuellement retirer le revêtement, de préférence par meulage, de la plaquette de friction.

15. Procédé de fabrication d'un revêtement pour plaquette de frein selon une ou plusieurs des revendications 1 à 12 précédentes, comprenant les étapes suivantes:
fournir une poudre comprenant une concentration en graphène comprise entre 1 et 40 % en poids en combinaison avec des composants de revêtement en poudre choisis parmi des résines thermodurcissables, des agents de durcissement, des agents de nivellement, des modificateurs d'écoulement et des oxydes métalliques ou des combinaisons de ceux-ci, le graphène comprenant du graphène sous forme de plaquettes froissées ou de plaquettes froissées en combinaison avec des plaquettes plates;
pulvériser électrostatiquement la poudre sur au moins une partie de la plaque de support (1) et/ou sur au moins une partie de l'extension de la plaque de support (5);
durcir le revêtement en poudre pour le solidifier; et
éventuellement retirer le revêtement, de préférence par meulage, de la plaquette de friction.
